# FASCICULE DE BREVET EUROPEEN

(11) **EP 1 668 727 B1**
(45) Date de publication et mention de la délivrance du brevet: **26.11.2008**
(21) Numéro de dépôt: 04767910.5
(22) Date de dépôt: 21.07.2004
(51) Int. Cl.: H01M 8/02, H01M 4/86

(54) **STRUCTURE DE PILE A COMBUSTIBLE**
BRENNSTOFFZELLEN-STRUKTUR
FUEL CELL STRUCTURE

(30) Priorité: 19.09.2003 FR 0350574
(43) Date de publication de la demande: 14.06.2006
(73) Titulaire: L'AIR LIQUIDE, Société Anonyme pour l'Etude et l'Exploitation des Procédés Georges Claude, 75007 Paris (FR)
(72) Inventeur: CLAUDE, Eric, F-38600 Fontaine (FR)
(74) Mandataire: De Cuenca, Emmanuel Jaime
(86) Numéro de dépôt international: PCT/FR2004/050349
(87) Numéro de publication internationale: WO 2005/029621

(56) Documents cités:
- EP-A- 1 029 946
- EP-A- 1 328 030
- WO-A-99/60642
- US-A- 6 096 450
- US-A1- 2002 192 536
- US-A1- 2003 124 413

## Description

La présente invention concerne les piles à combustible du type à électrolyte solide à membrane-électrodes, chaque électrode étant associée à un collecteur de courant métallique via une couche de diffusion de gaz à base de fibres conductrices.

La présente invention a plus précisément pour objet de proposer une structure de pile à combustible de ce type configurée pour diminuer la résistance électronique de contact entre le collecteur métallique et la couche de diffusion des gaz.

Pour ce faire, l'état de surface de la surface du collecteur métallique en contact avec la couche de diffusion est adapté à celui de la surface de la couche de diffusion.

Selon l'invention, la pile à combustible est conforme à la revendication 1.

Selon des caractéristiques plus particulières de l'invention :
- ladite surface du collecteur métallique est soumise à une déformation, typiquement mécanique, pour présenter des irrégularités de dimensions analogues à celles de la surface de la couche de diffusion, avec des creux typiquement compris entre environ 5 µm et 100 µm tel que défini dans la revendication 1.

D'autres caractéristiques et avantages de la présente invention ressortiront de la description suivante de modes de réalisation, donnée à titre illustratif mais nullement limitatif, faite en relation avec les dessins annexés, sur lesquels
- La figure 1 est une vue schématique en perspective, non à l'échelle, d'une cellule de pile à combustible selon l'invention ;
- La figure 2 est une vue schématique en coupe partielle agrandie de la zone d'interface (I) entre le collecteur métallique et la couche de diffusion de gaz ;
- la figure 3 représente, à l'échelle macroscopique, trois états de surface différents du collecteur métallique ; et
- la figure 4 représente, à l'échelle de la figure 3, des morphologies de surfaces de couches de diffusion.

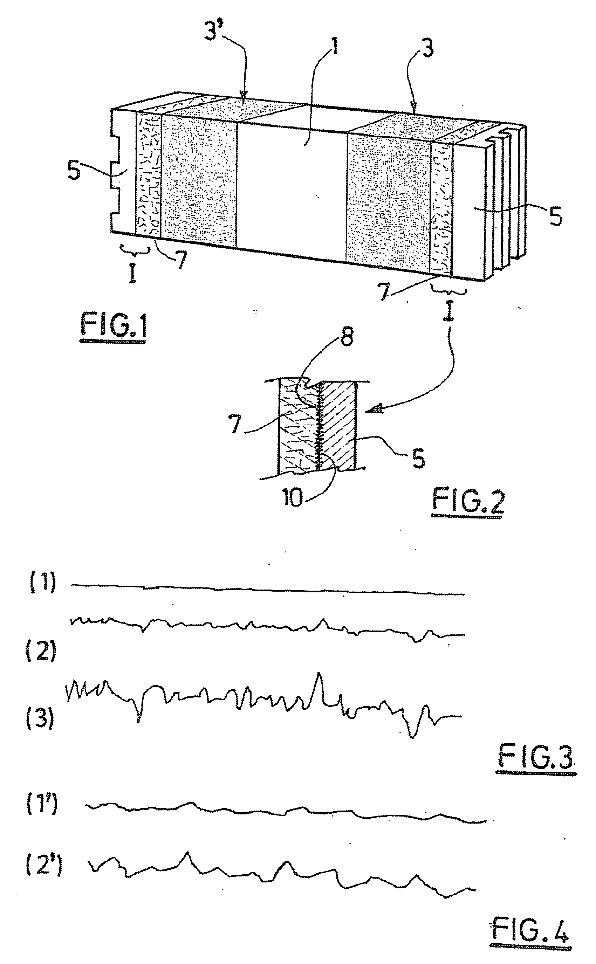

Comme représenté schématiquement sur la figure 1, une cellule de pile à combustible selon l'invention comprend essentiellement une membrane échangeuse de protons 1 sur les faces de laquelle sont appliquées des couches actives comprenant un catalyseur, tel que le platine, et associées respectivement à une cathode 3 et à une anode 3', elles-mêmes associées extérieurement à des blocs métalliques bi-polaires 5 avec interposition d'une couche fibreuse de diffusion de gaz 7.

Comme représenté schématiquement sur la figure 2, l'interface (I) entre une couche poreuse 7 et un bloc métallique 5 est effectué par contact sous pression entre les faces en regard 8 et 10, respectivement, de ces deux éléments.

Classiquement, la surface de contact 8 du collecteur métallique 5, réalisé typiquement en acier inoxydable, présente un état de surface très lisse, obtenu par recuit brillant ou poli, comme figuré par la ligne 1 sur la figure 3.

A contrario, la couche de diffusion de gaz 7 est réalisée sous la forme de tissu ou de feutre fibreux, typiquement de fibres de carbone, qui présente une rugosité externe intrinsèque, avec des irrégularités moyennes, comme représenté par le profil 1' sur la figure 4 pour les feutres, relativement rigides, ou avec des irrégularités assez fortes, comme représenté par le profil 2' de la figure 4 pour les tissus, généralement souples et élastiques.

Selon l'invention, pour obtenir à l'échelle microscopique, la surface effective de contact la plus élevée entre les deux éléments 5 et 7, l'état de surface de la surface de contact 8 de la plaque formant le collecteur métallique 5 est modifié, par déformation superficielle mécanique ou électromécanique, pour présenter également des irrégularités moyennes, comme représenté sur le profil 2 de la figure 3, avec des creux typiquement de l'ordre de 5 µm à 15 µm, ou fortes, comme représenté sur le profil 3 de la figure 3, avec des creux typiquement de l'ordre de 50 à 100 µm, correspondant sensiblement aux irrégularités de la couche de diffusion, en l'occurrence 1' et 2' respectivement.

Avec un tel appareillement des morphologies des surfaces en contact, la performance de chaque cellule de pile à combustible se trouve améliorée, soit au plan électrique en terme de puissance et de rendement à densité de courant donnée pour une pression mécanique d'assemblage donnée, soit au plan mécanique avec une pression d'assemblage nécessaire plus faible pour obtenir une même puissance et un rendement identiques avec une densité de courant déterminé.

La déformation superficielle de la surface métallique de contact peut être obtenue de différentes manières. Il peut s'agir d'un traitement antérieur ou postérieur à l'emboutissage de la plaque formant le collecteur métallique, par exemple par sablage, utilisation d'une lime à rugosité contrôlée ou encore d'un papier de verre. L'état de rugosité de la surface métallique peut aussi être obtenu pendant l'opération d'emboutissage en jouant sur l'état de surface de l'outil d'emboutissage, par exemple par électo-érosion.

Dans tous les cas, la déformation est modulée pour donner un niveau de rugosité déterminé obtenu par un choix judicieux des particules de sable, de la maille de la lime, de la taille du grain du papier abrasif ou de la rugosité de la surface de l'outil d'emboutissage.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Pile à combustible comprenant, de part et d'autre d'une membrane (1), une électrode (3, 3') associée à un collecteur de courant métallique (5) via une couche fibreuse de diffusion de gaz (7) réalisée sous la forme de tissu ou de feutre fibreux, dans laquelle la surface (8) du collecteur métallique en contact avec la couche de diffusion (7) présente des déformations ayant des irrégularités analogues à celles de la surface (10) de la couche de diffusion (7), des irrégularités moyennes avec des creux de l'ordre de 5µm à 15 µm dans le cas où la couche fibreuse de diffusion de gaz (7) est réalisée sous la forme de feutre fibreux, ou des irrégularités moyennes avec des creux de l'ordre de 50µm à 100 µm dans le cas où la couche fibreuse de diffusion de gaz (7) est réalisée sous la forme de tissu.

2. Pile à combustible selon la revendication 1, **caractérisée en ce que** la déformation est effectuée par abrasion mécanique.

3. Pile à combustible selon la revendication 1, **caractérisée en ce que** la déformation est effectuée par emboutissage.

4. Pile à combustible selon l'une des revendications précédentes, **caractérisée en ce que** le collecteur métallique (5) est réalisé en acier inoxydable.

## Claims

1. Fuel cell comprising, on each side of a membrane (1), an electrode (3; 3') joined to a metal current collector (5) via a fibrous gas diffusion layer (7) produced in the form of a woven fabric or a fibrous felt, in which the surface (8) of the metal current collector in contact with the diffusion layer (7) has deformations having irregularities similar to those on the surface (10) of the diffusion layer (7), average irregularities with hollows of around 5 µm to 15 µm if the fibrous gas diffusion layer (7) is produced in the form of a fibrous felt, or average irregularities with hollows of around 50 µm to 100 µm if the fibrous gas diffusion layer (7) is produced in the form of a woven fabric.

2. Fuel cell according to Claim 1, **characterized in that** the deformation is carried out by mechanical abrasion.

3. Fuel cell according to Claim 1, **characterized in that** the deformation is carried out by stamping.

4. Fuel cell according to one of the preceding claims, **characterized in that** the metal collector (5) is made of stainless steel.

## Patentansprüche

1. Brennstoffzelle, welche beiderseits einer Membran (1) eine Elektrode (3, 3') aufweist, die mit einem metallischen Stromkollektor (5) über eine in Form von Fasergewebe oder Faserfilz ausgeführte Gasdiffusionsfaserschicht (7) verbunden ist, und bei welcher die Fläche (8) des metallischen Kollektors, die sich mit der Diffusionsschicht (7) in Kontakt befindet, Verformungen aufweist, die Unregelmäßigkeiten haben, die zu denen der Fläche (10) der Diffusionsschicht (7) analog sind, mittlere Unregelmäßigkeiten mit Vertiefungen in der Größenordnung von 5 µm bis 15 µm in dem Falle, wenn die Gasdiffusionsfaserschicht (7) in Form von Faserfilz ausgeführt ist, oder mittlere Unregelmäßigkeiten mit Vertiefungen in der Größenordnung von 50 µm bis 100 µm in dem Falle, wenn die Gasdiffusionsfaserschicht (7) in Form von Gewebe ausgeführt ist.

2. Brennstoffzelle nach Anspruch 1, **dadurch gekennzeichnet, dass** die Verformung durch mechanische Abrasion bewirkt wird.

3. Brennstoffzelle nach Anspruch 1, **dadurch gekennzeichnet, dass** die Verformung durch Tiefziehen bewirkt wird.

4. Brennstoffzelle nach einem der vorhergehenden Ansprüche, **dadurch gekennzeichnet, dass** der metallische Kollektor (5) aus nichtrostendem Stahl hergestellt ist.
